# EUROPÄISCHE PATENTSCHRIFT

(11) **EP 0 922 179 B1**
(45) Veröffentlichungstag und Bekanntmachung des Hinweises auf die Patenterteilung: **15.05.2002**
(21) Anmeldenummer: 97941858.9
(22) Anmeldetag: 29.08.1997
(51) Int. Cl.: F16L 59/06, E04C 2/16

(54) **MEHRSCHICHTIGER FOLIEN-DÄMMSTOFF FÜR WÄRMEISOLATION UND SCHALLSCHUTZ**
MULTILAYERED SHEET INSULATING MATERIAL FOR HEAT INSULATION AND SOUND PROOFING
MATERIAU D'ISOLATION EN FEUILLE MULTICOUCHE POUR L'ISOLATION THERMIQUE ET ACOUSTIQUE

(30) Priorität: 30.08.1996 DE 19635214
(43) Veröffentlichungstag der Anmeldung: 16.06.1999
(73) Patentinhaber: Technische Universität Dresden, 01069 Dresden (DE)
(72) Erfinder: OFFERMANN, Peter, D-01465 Liegau-Augustusbad (DE); BERSCHEV, Evgueni, St.Petersburg, 196244 (RU); HOFFMANN, Gerald, D-01723 Wilsdruff (DE); LOBOVA, Ludmila, St.Petersburg, 196191 (RU); FREUDENBERG, Christiane, D-01476 Weixdorf (DE)
(86) Internationale Anmeldenummer: DE9701901
(87) Internationale Veröffentlichungsnummer: WO9809109

(56) Entgegenhaltungen:
- WO-A-90/12934
- WO-A-94/16162
- US-A- 4 444 821

## Beschreibung

Die Erfindung betrifft einen mehrschichtigen Folien-Dämmstoff für Wärmeisolation und Schallschutz gemäß dem Oberbegriff des Anspruchs 1. Der Dämmstoff ist als Wärme- und Schallisolationsmaterial in technischen Bereichen (z. B. Fahrzeugbau, Luft- und Raumfahrt) und im Bauwesen vorgesehen.

Dämmstoffe sind Mehrkomponentensysteme, deren Gefüge sich bekannterweise aus Feststoffteilen und Gasvolumina zusammensetzen. Durch die günstige Gestaltung und Anordnung dieser Bestandteile im Querschnitt wird durch kleine Gaseinschlüsse die Dämmwirkung hervorgerufen. Wie bekannt ist, setzt sich die wirksame Wärmeleitfähigkeit eines Materials zusammen aus der Wärmeleitung der Feststoffe und der wirksamen Wärmeleitfähigkeit des eingeschlossenen Gases. Diese ergibt sich durch die Anteile der scheinbaren Wärmeleitfähigkeiten, die durch Konvektion und Strahlung innerhalb der Konstruktion hervorgerufen werden und der eigentlichen Wärmeleitfähigkeit des Gases.

Es ist bekannt, daß die Superisolationsdämmstoffe im Schichtaufbau konstruiert werden können. Die Schichten werden durch dünne Metall- meist Stahl- oder Aluminiumplatten oder durch metallisierte Folien gebildet. Um eine Berührung der Schichten zu verhindern, werden mehr oder weniger isolierende Abstandshalter eingebaut. Diese Konstruktionen können bei Erfüllung gewisser Anforderungen evakuiert werden.

Vakuum - Isolierungen werden meist als Paneele oder Bauteile, weniger als größflächige Materialien eingesetzt, da der Arbeits- und Materialaufwand bei der Herstellung sehr hoch ist.

Aus der DE-OS 39 00 311 A1 ist eine mehrschichtige evakuierte Konstruktion bekannt. Mehrere dünne Stahlbleche werden durch gering wärmeleitende Stützen mittels geeigneten Kleber dauerhaft miteinander verbunden. Durch das Einbringen von dünnen Fasern oder Schaumstoff in den Zwischenraum werden Strahlungsverluste verringert. Durch die Parallellage der Fasern zu den Stahlblechen entstehen große Kontaktflächen, die die Wärmebrücken vergrößern und die Wärmeverluste erhöhen. Als Stützen werden Kunststoffe oder Stahl verwendet. Als nachteilig bei dieser Konstruktion ist die Steifheit, d. h. keine Flexibiltät, und das hohe Gewicht einzuschätzen.

In der DE-OS 40 03 770 A1 wird eine wärmeisolierende Umhüllung für technische Anlagen gezeigt. Die Aluminiumfolien bilden durch eine Profilierung wärmedämmende Kammern. Bei der Wärmeschutzmatte nach DE-OS 35 07 323 A1 werden metallbeschichtete Folien unmittelbar miteinander durch kurze Schweißnähte verbunden. In die Zwischenräume werden Spreizelemente eingearbeitet, die für die Isolierwirkung nötig sind. Bei diesen Erfindungen ist nachteilig, daß ein direkter Kontakt zwischen den einzelnen Folien entsteht. Dadurch wird die Wärmeleitung innerhalb der Folien begünstigt. Diese Konstruktionen sind hart und nicht flexibel. Für die Profilierung sind relativ steife Folien nötig, die ein hohes Gewicht besitzen.

Bei dem Einsatz von Folien in der Konstruktion wird der Abstand durch das Einfüllen von Fasern, die parallel zur Folie liegen, mittels Keramikpartikel oder Stützen aus Glasfaserpapier realisiert. Die Erfindung nach der DE-OS 35 32 663 A 1 beschreibt eine weiche Superisolierung, bei der Stege, die nach bestimmter Geometrie eingearbeitet sind, den Abstand der metallisierten Folien realiseren. In der CS 24 30 75 wird ein Isoliermaterial vorgestellt, bei dem ein Faservlies, bestehend aus Polyesterfasern und/oder Polypropylenfasern mit einer metallbeschichteten Folie umgeben ist. Diese Vliese, die mit einer nicht metallisierten Folie beschichtet sind, können zweifach dubliert und mit bestimmten Druck verfestigt werden. Dazu ist ein hoher Energieaufwand notwendig. Bei allen Konstruktionen sind die Kontaktflächen zwischen den Abstandshaltern und den Folien relativ groß, da die Fasern mit ihrer Länge mit den Folien in Kontakt kommen. Dadurch ist mit Wärmeverlusten infolge von Wärmeleitung zu rechnen.

Die Aufgabe der Erfindung besteht darin, einen Dämmstoff zu schaffen, der eine extrem hohe Isolierwirkung bei geringem Gewicht, geringer Dicke und hoher Flexibilität aufweist. Dabei sollen ökonomische und ökologische Gesichtspunkte Beachtung finden. Vor allem soll die Einsparung von Material, eine superleichte Konstruktion ermöglichen. Ziel dessen sind Einsparungen bezüglich Herstellungsaufwand, Senkung der entstehenden Abfälle und Verringerung der Transportkosten vor allem beim Einsatz in Transportmitteln.

Die Lösung der Aufgabe erfolgt bei einem mehrschichtigen Folien-Dämmstoff gemäß dem Oberbegriff des Anspruchs 1 erfindungsgemäß durch dessen kennzeichnenden Merkmale.

Weiterbildungen und Ausführungen sind Gegenstand von Unteransprüchen.

Der schichtweise Aufbau senkrecht zum Wärmestrom ergibt sich durch schichtbildende parallele Trennschichten im Abstand von 0,5 mm bis 5 mm zueinander. Erfindungsgemäß werden zur Gewährleistung der definierten Abstände senkrecht orientierte Distanzfasern eingesetzt. Die Anzahl der Schichten ist abhängig von der Anwendung und dementsprechend von der erforderlichen Dämmleistung.
Als schichtbildende Elemente, bzw. Trennschichten werden anforderungsgemäß ebene Membranen mit einem geringen Strahlungskoeffizienten und geringer Dicke verwendet. Dadurch werden die Anteile der scheinbaren Wärmeleitfähigkeiten, infolge von Konvektion und Strahlung minimiert. Als Membranen sind Polyesterfolien im Bereich von 2 bis 20 µm, auch perforiert, besonders bevorzugt. Sie können ein oder zweiseitig mit Aluminium beschichtet sein. Es können auch andere Membranen wie Vliesstoffe, dünne Platten oder Folien aus Keramik, Zellulose u. a. mit oder ohne Metallbeschichtung eingesetzt werden.
Als Distanzfascrn werden prinzipiell alle Faserstoffe (z. B. Polyamid, Polypropylen, Viskose, Aramid, Glas, Kohlenstoffasern) mit einer Länge von 0,5 bis 5 mm und einer Feinheit ab 0,5 dtex eingesetzt.
Die Fasern werden vorteilhaft in einer Gruppe parallelisiert und zur Folie senkrecht orientiert angeordnet. Durch die definierte Anordnung der auf eine bestimmte Länge geschnittenen Fasern auf der Membran wird ein konstanter Abstand der Trennschichten realisiert. Die geometrische Anordnung der Distanzfasern auf der Membran kann punktuell stochastisch oder definiert, als Gitter- oder Ringstruktur erfolgen. Dadurch können die Kontaktfläche und somit die Wärmeverluste infolge Wärmeleitung minimiert werden. Die Abmaße sind so zu gestalten, daß die Membranen nach der Dublierung nicht mit einander kontaktieren können. Bei der Dublierung kann nach folgenden Varianten unterschieden werden:
1. Die Trennschichten werden bei jeder Dublierung definiert angeordnet, so daß die Distanzfasern exakt, teilweise oder gar nicht übereinander liegen
2. Die Trennschichten werden bei jeder Dublierung stochastisch angeordnet, so daß eine Beschreibung der Lage der Distanzfasern nicht exakt möglich ist.

Der Vorteil des erfindungsgemäßen mehrschichtigen Folien-Dämmstoffs besteht darin, daß durch aufrechtstehende Fasern eine stabile Stützfunktion der flexiblen Trennschichten erreicht wurde. Bezogen auf das Gesamtgewicht haben die Fasern nur einen geringen Gewichtsanteil. Auf Grund der kleinen Berührungsfläche der Faserenden mit den Trennschichten wird eine außerordentlich hohe Wärmedämmung erreicht.

Weitere Einzelheiten und Vorteile werden an Hand der nachfolgenden Ausführungsbeispielen näher erläutert. In den Zeichnungen zeigen:
- Fig. 1: einen Schnitt durch einen erfindungsgemäßen mehrschichtigen Folien-Dämmstoff
- Fig. 2: eine zu Fig. 1 gehörende Detaildarstellung
- Fig. 3a: ein Beispiel für eine punktuelle Verteilung des Klebemittels
- Fig. 3b: wie Fig. 3a, jedoch mit ringförmigen Klebemittelpunkten
- Fig. 3c: ein Beispiel für eine gitterförmige Anordnung des Klebemittels

Im Ausführungsbeispiel wird zunächst auf die beispielhafte Herstellung eines Dämmstoffes eingegangen und anschließend ein derartig hergestellter Dämmstoff näher erläutert.

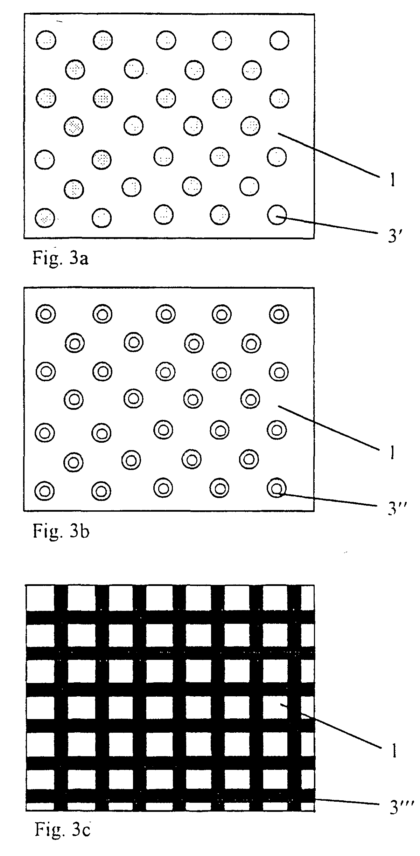

Der Herstellung des Dämmstoffes kann ein kontinuierlich oder diskontinuierlich arbeitendes Verfahrensprinzip zu Grunde liegen. Die Herstellung erfolgt derart, daß der Bindemittelauftrag einoder zweiseitig auf die Trennschicht erfolgt. Entsprechend der Geometrie des Kleberauftrags (Fig. 3) wird mit Rotations-Siebdruck, Schablone und Rakel bzw. Druckwalze oder vollflächig nach entsprechender Technologie gearbeitet.

Figur 3 a zeigt die Anordnung des Klebemittels 3' nach eine punktuellen Geometrie. Die Abstände zwischen den Punkten sind in alle Richtungen annähernd konstant. In Figur 3 b sind die Klebemittelpunkte als Ringe 3" ausgebildet. Die Distanzfasern werden dadurch nach einer ringförmigen Geometrie auf der Membran angeordnet. Vorteilhaft ist die Vergrößerung der Auflagefläche bei gleicher Kontaktfläche und dadurch die Verbesserung der Auflagegeometrie und Verringerung der Wärmeverluste. Die Figur 3 c stellt beispielhaft den Kleberauftrag 3''' nach einer Gitterstruktur dar.

Die chemisch vorbehandelten Fasern werden in einem elektrischen Feld elektrisch aufgeladen. In diesem Feld orientieren sich die Fasern in Richtung der Feldlinien, in z-Richtung und treffen senkrecht orientiert und parallelisiert vorzugsweise in den Kleberpunkten auf der in xy-Richtung liegenden ebenen Trennschicht auf.

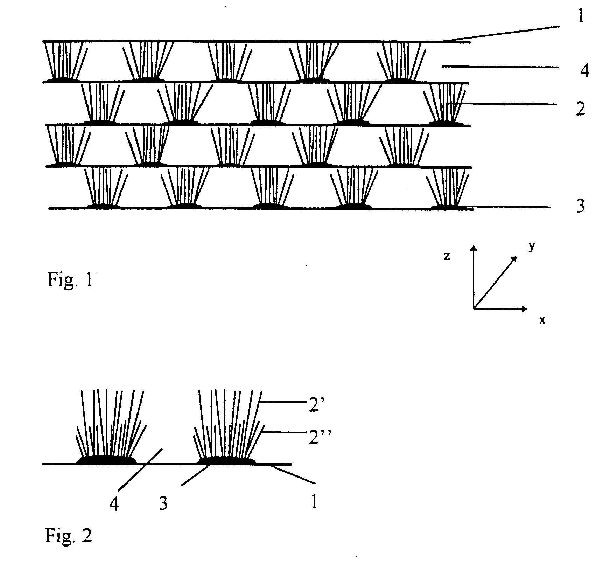

Die senkrecht orientierte Ausrichtung bleibt im Kleberbett erhalten. Die Fixierung erfolgt im nachgeschalteten Trocknungsprozeß. Die Membran, auf der sich Distanzfasern befinden, kann auf eine Rolle gewickelt, oder als Stückgut abgelegt werden. Dadurch wird sie zur weiteren Verarbeitung (z. B. Dublierung) bereitgestellt. Die erforderliche Dämmwirkung wird dadurch erzielt, daß ein Dämmelement (z. B. Paneel) hergestellt wird. Dazu sind die Membranen in bestimmter Größe zuzuschneiden, zu stapeln und evtl. miteinander zu verbinden. Eine andere Möglichkeit zur Erzielung der Dämmwirkung bietet das Umwickeln des zu dämmenden Teils.
Die Herstellung bietet verschiedene Variationsmöglichkeiten zur Anpassung an die ausgewählten Materialien und der produktspezifischen Anforderungen. Das betrifft z.B. die Regulierung der Feldstärke, des Faserstoffs, der Länge und Feinheit der Faser, der Faserauftragdichte, der Herstellungsgeschwindigkeit und der Wickelkraft.
Ein entsprechender erfindungsgemäßer Dämmstoff ist im Schnitt in der Fig. 1 dargestellt. Der Dämmstoff weist fünf Trennschichten 1 in z-Richtung auf. In x-y-Richtung sind gleichmäßig verteilte Faserbündel 2 vorgesehen. Das eine Ende der Fasern 2 ist mit der Trennschicht 1 durch ein Klebemittel 3 verbunden. An dem anderen Ende der Fasern 2 liegt die Trennschicht auf oder an. Die Trennschicht 1 besteht ihrerseits aus einer Polyesterfolie, die beidseitig mit Aluminium beschichtet ist. Der Aufbau des Dämmstoffs ist so gewählt, das die Enden der Fasern 2 an den Stellen der Trennschicht 1 anliegen, dessen gegenüberliegende Seite von Faserbündeln freigelassen ist.
Entsprechend der Darstellung in der Fig. 2 bestehen die Faserbündel aus Distanzfasern 2' und Stützfasern 2". Die Distanzfasern 2' weisen eine größere Länge als die Stützfasern 2" auf. Durch die Verwendung von Fasern unterschiedlicher Länge besteht die Möglichkeit die Feststoffleitung herabzusetzen. Die kürzeren Fasern (Stützfasern) haben unterstützende Wirkung zu den Distanzfasern.
Durch den Einsatz von Hohl- und Profilfasern wird die Wärmeleitung über die Feststoffteile weiter herabgesetzt. Gleichzeitig erfolgt eine Erhöhung der mechanischen Belastbarkeit, da Hohlfasern z.B. höhere Biegemomente aufnehmen können als herkömmliche Fasern.
Durch den Einsatz von Faserstoffen mit geringer Wärmeleitfähigkeit kann der Wärmeverlust der Konstruktion verringert werden.
Als Gase zwischen den Folien können bei dieser Konstruktion Luft, Edel- oder Isoliergase eingesetzt werden. Eine Evakuierung setzt die Dämmwirkung herauf. Durch den Einsatz der Distanzfasern nach einer bestimmten Geometrie wird gewährleistet, daß keine Kontakte infolge Luftdruck bis zu 1· 10⁵ Pa (Normalluftdruck) zwischen den Folien entstehen können.
Die Trennschicht 1 und die Distanzfasern 2', wenn erfindungsgemäß erforderlich auch die Stützfasern 2", werden mittels Bindemittel 3 verbunden. Die Klebepunkte 3 werden geometrieabhängig aufgetragen. Bei der Verwendung von Materialien mit niedrigem Schmelzniveau können die Komponenten Trennschicht 1, Distanz 2' - und Stützfasern 2" durch gebildete Schmelzpunkte 3 miteinander verbunden werden.
Die einzelnen Folien mit den senkrecht orientierten Fasern 2 können mittels Kleben, Schmelzen oder Vernähen punktuell miteinander verbunden werden.

### Bezugszeichenliste

- 1 -: Trennschicht
- 2 -: Faserbündel
- 2' -: Distanzfaser
- 2" -: Stützfaser
- 3 -: Klebemittel
- 3' -: Klebemittel, punktförmig
- 3" -: Klebemittel, ringförmig
- 3'''-: Klebemittel, gitterförmig
- 4 -: Zwischenraum

## Patentansprüche

1. Mehrschichtiger Folien-Dämmstoff für Wärmeisolation und Schallschutz, bestehend aus mindestens zwei Trennschichten (1), für die flexible Materialien wie Folie, Vliesstoff, Papier o. dgl. eingesetzt werden, mit dazwischenliegenden senkrecht zur Trennschicht (1) orientierten Distanzelementen, **dadurch gekennzeichnet, daß** die Distanzelemente von einzelnen und freistehenden Distanzfasern (2') gebildet werden, wobei jede Trennschicht (1) mindestens auf einer Seite mit Enden der Distanzfasern (2') verbunden ist und die senkrechte Orientierung der Distanzfasern (2') über deren gesamte Länge sowie an der Verbindungsstelle erhalten bleibt.

2. Mehrschichtiger Folien-Dämmstoff nach Anspruch 1, **dadurch gekennzeichnet, daß** die Trennschicht (1) aus einer 2 bis 20 µm dicken ein- oder beidseitig mit Metall, z. B. Aluminium, beschichteten Polyesterfolie besteht.

3. Mehrschichtiger Folien-Dämmstoff nach Anspruch 1 oder 2, **dadurch gekennzeichnet, daß** die Distanzfasern (2') eine Länge von 0,5 bis 5 mm aufweisen.

4. Mehrschichtiger Folien-Dämmstoff nach einem der Ansprüche 1 bis 3, **dadurch gekennzeichnet, daß** die Distanzfasern (2') verschiedene Faserstoffe und chemisch vorbehandelt sind.

5. Mehrschichtiger Folien-Dämmstoff nach einem der Ansprüche 1 bis 4, **dadurch gekennzeichnet, daß** die Distanzfasern (2') hohl sind.

6. Mehrschichtiger Folien-Dämmstoff nach einem der Ansprüche 1 bis 5, **dadurch gekennzeichnet, daß** zwischen den Distanzfasern (2') kürzere Stützfasern (2") parallelisiert zu den Distanzfasern (2') angeordnet sind.

7. Mehrschichtiger Folien-Dämmstoff nach Anspruch 1 und 6, **dadurch gekennzeichnet, daß** die Distanzfasern (2') und Stützfasern (2") in der Fläche zwischen den Trennschichten (1) stochastisch verteilt angeordnet sind.

8. Mehrschichtiger Folien-Dämmstoff nach Anspruch 1 und 6, **dadurch gekennzeichnet, daß** die Distanzfasern (2') und Stützfasern (2") in der Fläche zwischen den Trennschichten (1) in Gruppen, vorzugsweise ein gepunktetes, gitter- oder ringartiges Muster bildend, angeordnet sind.

9. Mehrschichtiger Folien-Dämmstoff nach Anspruch 1 und 6, **dadurch gekennzeichnet, daß** die Trennschichten (1) mit den Enden der Distanzfasern (2') und Stützfasern (2") durch ein Bindemittel (3) verbunden sind.

10. Mehrschichtiger Folien-Dämmstoff nach Anspruch 1 und 6, **dadurch gekennzeichnet, daß** die Trennschichten (1) mit den Distanzfasern (2') und Stützfasern (2") durch aus den Distanzfasern (2') und Stützfasern (2") gebildete Schmelzpunkte (3) verbunden sind.

11. Mehrschichtiger Folien-Dämmstoff nach einem der Ansprüche 1 bis 10, **dadurch gekennzeichnet, daß** die Trennschichten (1) übereinander in z - Richtung angeordnet sind.

12. Mehrschichtiger Folien-Dämmstoff nach Anspruch 1, **dadurch gekennzeichnet, daß** die Distanzfasern (2') auf beiden Scitcn der Trennschicht (1) fixiert sind.

13. Mehrschichtiger Folien-Dämmstoff nach Anspruch 1, **dadurch gekennzeichnet, daß** der Zwischenraum (4) der Trennschichten (1) evakuiert ist, und die Trennschichten (1) über ihre Flächen auf Abstand gehalten sind.

14. Mehrschichtiger Folien-Dämmstoff nach Anspruch 1, **dadurch gekennzeichnet, daß** der Zwischenraum (4) der Trennschichten (1) mit Edel- oder Isoliergas gefüllt ist.

15. Mehrschichtiger Folien-Dämmstoff nach Anspruch 1 und 13 oder 14, **dadurch gekennzeichnet, daß** die Trennschichten (1) Perforationen aufweisen.

## Claims

1. Multilayered sheet insulation material for heat insulation and sound proofing consisting of at least two separating layers (1), for which flexible materials such as films, web materials, paper or the like are used with intermediate spacer elements oriented rectangular to the separating layers (1) **characterized in that** the spacer elements are made of single and free-standing distance fibres (2'), whereby each separating layer (1) at least on one side is connected to ends of the distance fibres (2'), and the vertical orientation of the distance fibres (2') is maintained over the whole length and at the connection place as well.

2. Multilayered sheet insulation material to Claim 1 **characterized in that** the separating layer (1) consists of a 2 to 20 µm thick polyester film coated on one or both sides with metal, e.g. aluminium.

3. Multilayered sheet insulation material to Claim 1 or 2 **characterized in that** the distance fibres (2') have a length of 0.5 to 5 mm.

4. Multilayered sheet insulation material to any of the Claims 1 to 3 **characterized in that** the distance fibres (2') are different fibre materials and chemically pretreated.

5. Multilayered sheet insulation material to any of the Claims 1 to 4 **characterized in that** the distance fibres (2') are hollow.

6. Multilayered sheet insulation material to any of the Claims 1 to 5 **characterized in that** between the distance fibres (2') there are shorter supporting fibres (2") arranged parallel to the distance fibres (2').

7. Multilayered sheet insulation material to Claims 1 and 6 **characterized in that** the distance fibres (2') and supporting fibres (2") are stochastically distributed in the area between the separating layers (1).

8. Multilayered sheet insulation material to Claims 1 and 6 **characterized in that** the distance fibres (2') and supporting fibres (2") are arranged in the area between the separating layers (1) in groups which form preferably a dotted grating or ring pattern.

9. Multilayered sheet insulation material to Claims 1 and 6 **characterized in that** the separating layers ( I ) are connected to the ends of the distance fibres (2') and supporting fibres (2") by means of a binding agent (3).

10. Multilayered sheet insulation material to any of the Claims 1 to 11 **characterized in that** the separating layers (1) are connected to the distance fibres (2') and supporting fibres (2") by fusion spots (3) formed of the distance fibres (2') and supporting fibres (2").

11. Multilayered sheet insulation material to Claim 1 **characterized in that** the separating layers (1) are arranged over each other in z-direction.

12. Multilayered sheet insulation material to Claim 1 **characterized in that** the distance fibres (2') are fixed in position on either side of the separating layer (1).

13. Multilayered sheet insulation material to Claim 1 **characterized in that** the space (4) between the separating layers (1) is evacuated and the distance between the separating layers (1) is maintained over their whole areas.

14. Multilayered sheet insulation material to Claim 1 **characterized in that** the space (4) between the separating layers (1) is filled with a noble or insulating gas.

15. Multilayered sheet insulation material to Claims 1 and 13 or 14 **characterized in that** the separating layers (1) have perforations.

## Revendications

1. Matériau d'isolation en feuille multicouche pour l'isolation thermique et acoustique, composé d'au moins deux couches de séparation (1), pour lesquelles on utilise des matériaux flexibles, tels que des étoffes de nappe de fibres, du papier ou d'autres, et entre lesquelles il y a des éléments d'écartement orientés verticalement à la couche de séparation (1), **caractérisé par le fait que** les éléments d'écartement sont en fibres d'écartement à disposition libre et isolée (2'), que chaque couche de séparation (1) est jointe au moins à un bout des fibres d'écartement (2') et que les fibres d'écartement (2') gardent leur orientation verticale sur toute leur longueur ainsi qu'au point de jonction.

2. Matériau d'isolation en feuille multicouche selon la revendication n°. 1, **caractérisé par le fait que** la couche de séparation (1) est un film de polyester mince d'une épaisseur de 2 à 20 µm couvert de métal, par ex. d'aluminium.

3. Matériau d'isolation en feuille multicouche selon les revendications n°. 1 ou 2, **caractérisé par le fait que** les fibres d'écartement (2') ont une longueur de 0,5 à 5 mm.

4. Matériau d'isolation en feuille multicouche selon l'une des revendications n°. 1 à 3, **caractérisé par le fait que** les fibres d'écartement (2') sont en différentes matières fibreuses et qu'elles ont été soumises à un traitement chimique préalable.

5. Matériau d'isolation en feuille multicouche selon l'une des revendications n°. 1 à 4, **caractérisé par** les fibres d'écartement (2') creuses.

6. Matériau d'isolation en feuille multicouche selon l'une des revendications n°. 1 à 5, **caractérisé par** des fibres de support (2") plus courtes qui sont disposées entre les fibres d'écartement (2') parallèlement aux fibres d'écartement (2').

7. Matériau d'isolation en feuille multicouche selon l'une des revendications n°. 1 à 6, **caractérisé par** une disposition aléatoire des fibres d'écartement (2') et les fibres de support (2") sur la surface entre les couches de séparation (1).

8. Matériau d'isolation en feuille multicouche selon l'une des revendications n°. 1 à 6, **caractérisé par le fait que** les fibres d'écartement (2') et des fibres de support (2") sont disposées en groupes dans l'espace entre les couches de séparation (1), de préférence en forme de points, de treillis ou d'anneau.

9. Matériau d'isolation en feuille multicouche selon l'une des revendications n°. 1 à 6, **caractérisé par** la liaison des couches de séparation (1) et le bout des fibres d'écartement (2') et des fibres de support (2") à l'aide d'un adhésif (3).

10. Matériau d'isolation en feuille multicouche selon l'une des revendications n°. 1 à 6, **caractérisé par le fait que** la liaison entre les couches de séparation (1) par les fibres d'écartement (2') et les fibres de support (2") est exécutée à l'aide de points de fusion (3) formés par les fibres d'écartement (2') et les fibres de support (2").

11. Matériau d'isolation en feuille multicouche selon l'une des revendications n°. 1 à 10, **caractérisé par le fait que** les couches de séparation (1) sont disposées l'une sur l'autre dans la direction z.

12. Matériau d'isolation en feuille multicouche selon la revendication n°. 1, **caractérisé par** la fixation des fibres d'écartement (2') sur les deux côtés de la couche de séparation (1).

13. Matériau d'isolation en feuille multicouche selon la revendication n°. 1, **caractérisé par** l'évacuation de l'espace (4) entre les couches de séparation (1), et par le fait que les couches de séparation (1) sont tenues à distance sur toute leur surface.

14. Matériau d'isolation en feuille multicouche selon la revendication n°. 1, **caractérisé par le fait que** l'espace (4) entre les couches de séparation (1) est remplie de gaz rare ou de gaz d'isolement.

15. Matériau d'isolation en feuille multicouche selon les revendications n°. 1 et 13 ou 14, **caractérisé par** l'existence de perforations dans les couches de séparation (1).
